Europäisches Patentamt

European Patent Office

Office européen des brevets

(11) Veröffentlichungsnummer: **0 093 437**
A2

## (12) EUROPÄISCHE PATENTANMELDUNG

(21) Anmeldenummer: 83104248.6

(22) Anmeldetag: 30.04.83

(51) Int. Cl.³: **G 01 S 17/10**

(30) Priorität: 03.05.82 DE 3216313

(43) Veröffentlichungstag der Anmeldung:
09.11.83 Patentblatt 83/45

(84) Benannte Vertragsstaaten:
AT CH FR GB IT LI NL SE

(71) Anmelder: Hipp, Johann F.
Schultessdamm 57
D-2000 Hamburg 65(DE)

(72) Erfinder: Hipp, Johann F.
Schultessdamm 57
D-2000 Hamburg 65(DE)

(74) Vertreter: Holländer, Franz G. et al,
Patentanwälte Holländer & Walenda Jungfernstieg 38
D-2000 Hamburg 36(DE)

(54) Regelungselektronische Einrichtung für elektrooptische Entfernungsmesser mit Lichtpulslaufzeit-Messverfahren.

(57) Um ein amplitudenunabhängiges Meßergebnis zu ermöglichen, wird eine regeltechnische Einrichtung für elektrooptische Entfernungsmesser mit Lichtpulslaufzeit-Meßverfahren angegeben, bei dem sowohl die Amplitude vom Startsignal als auch vom Stopsignal direkt gemessen werden.

Abhängig von den gemessenen Amplituden wird mit regeltechnischen Mitteln dafür gesorgt, daß der Mittelwert für die Stoppulse auf einen Sollwert geregelt wird, sodaß für die Messung nur Stoppulse mit Amplituden innerhalb eines bestimmten Bandes akzeptiert werden und die Startpulsamplitude für jede Messung auf eine bestimmte Größe geregelt wird, sodaß für jede Entfernungsmessung immer gleiche Mittelwerte für Start- und Stoppuls verwendet werden.

Abhängig von der Differenz von Soll- und Istwert der Amplitudenmittelwerte kann eine Messung gestartet, Einzelmessungen unterdrückt oder zugelassen werden.

./...

EP 0 093 437 A2

Fig 1

Anmelder:Dipl.Phys. Johann F. Hipp          HH.22.4.82
          Schulteßdamm 57,2 Hamburg 65

---

**Regelungselektronische Einrichtung für elektrooptische
Entfernungsmesser mit Lichtpulslaufzeit-Meßverfahren.**

---

Die Erfindung betrifft eine regelungselektronische Einrichtung in elektrooptischen Entfernungsmessern,in denen
die direkte Messung der Lichtlaufzeit von kurzen Lichtpulsen zur Entfernungsmessung genutzt wird.Bisher wurden
für Landvermessungszwecke elektrooptische Entfernungsmesser
verwendet,deren Meßprinzip darin besteht,die Phasendifferenz zwischen einer sinusförmig modulierten,ausgesendeten
und von einem entfernt aufgestellten Reflektor reflektierten,
einlaufenden Lichtwelle auszuwerten und daraus auf die
Entfernung zu schließen.Mit diesem Meßverfahren sind Genauigkeiten von +/- 5mm über mehrere Kilometer zu erreichen.
Nachteilig bei diesem Meßverfahren ist der relativ komplizierte Meßablauf,bei dem,aufgrund der Periodizität der
möglichen Phasendifferenzen,über schrittweise Modulationsfrequenzänderungen die Eindeutigkeit der Entfernungsmessung
erreicht werden muß.Dieser Vorgang dauert relativ lange,
sodaß vorhandene Geräte bis zu 10 sec Meßzeit benötigen.
Weiterhin sind diese Geräte bei Entfernungen über einige
10 m nur für Messungen auf hochwertige Reflektoren geeignet.
Für sehr große Reichweiten oder für Entfernungsmessungen
auf Ziele,die nicht mit Reflektoren ausgestattet sind
(passive Entfernungsmessung),ist das Pulslaufzeit-Meßverfahren aus mehreren Gründen sehr gut geeignet.Werden zur
Erzeugung der Lichtpulse Laser verwendet,z.B. gepulst betriebene Diodenlaser (Halbleiterlaser),so kann die Reichweite
auf Reflektoren oder insbesondere auf Ziele mit passiver
Reflexion wesenlich gesteigert und die Meßzeit wesentlich herabgesetzt werden.Bisher war es jedoch nicht möglich,
für Anwendungen in der Landesvermessung mit diesem Verfahren ausreichende Genauigkeiten zu erreichen.
Der Erfindung liegt die Aufgabe zugrunde,eine Regelungselektronik für Entfernungsmesser mit Lichtpuls-Laufzeit-
Meßverfahren zu schaffen,die es ermöglicht,die Vorteile
dieses Verfahrens,bei gleichzeitig hoher Genauigkeit der
Messung,nutzbar zu machen.
Die hauptsächlichen Hinderungsgründe dafür waren bisher,daß
die Laserlichtpulse aufgrund der hohen Temperaturabhängigkeit von gepulst  betriebenen Halbleiterlasern relativ
hoch ist,daß das reflektierte Signal durch atmosphärische
Beeinflussung stark in der Amplitude fluktuiert und daß die
endliche Anstiegszeit der Lichtpulse und die endliche Bandbreite der Empfänger,bei nicht konstanten Signalen erhebliche Fehler verursachen.Voraussetzung ist es deshalb,
sowohl den ausgesendeten Lichtpuls (Startpuls),als auch den
reflektierten empfangenen Lichtpuls (Stoppuls) auf für die
Meßgenauigkeit unschädliche Weise,immer gleiche Größe zu
regeln und festzustellen,wann die Sollwerte erreicht sind.
Dabei überschreitet der Regelbereich für den Stoppuls
mehrere Zehnerpotenzen,da im nahen Bereich auf hochwertige
Reflektoren ein wesentlich größeres Reflexionssignal erzielt
wird als im fernen Bereich auf schlechtere Reflektoren oder
bei Reflexion ohne Reflektor.
Die Lösung der Aufgabe geschieht erfindungsgemäß mit den im
kennzeichnendem Teil des Patentanspruchs 1 angegebenen
Merkmalen.Bei der erfindungsgemäßen,regelungselektronischen
Einrichtung wird davon ausgegangen,daß sowohl Startpuls als
auch Stoppuls vom gleichem Empfänger empfangen werden.Dabei
besteht der Empfänger im wesenlichen aus einem photosensitivem Element,das das empfangene Licht in ein elektrisches
Signal umsetzt,wie z.B. einer Photodiode,der Regelungselektronik für die Spannungsversorgung der Photodiode,dem elektrischen Verstärker und einer Eingriffsmöglichkeit für die
automatische Empfindlichkeitsregelung von Photodiode oder

- 5 -

Verstärker.
Der beim Meßvorgang periodisch ausgesendete Lichtpuls wird geräteintern zum geringen Teil auf die Diode gelenkt und der resultierende elektrische Impuls wird im Verstärker verstärkt. Entsprechend der Entfernung kommt wenig später das reflektierte Signal und wird auch in ein verstärktes,elektrisches Signal umgesetzt.Da beide Pulse auf eine jeweils konstant Größe geregelt werden sollen,das im analogen Aussteuerbereich des Verstärkers liegt,werden die beiden Pulse auf getrennte Leitungen geführt,um die Amplituden separat vermessen zu können.Dabei wird davon ausgegangen,daß die Pulse eine Pulsbreite von wenigen Nanosekunden haben,um trotz einer hohen Pulsfolgefrequenz nicht mit der verwendeten optischen Ausgangsleistung in einen gefährlichen Bereich zu kommen und schon durch eine kleine Anstiegszeit und Breite des Pulses die Unschärfe der Entfernungsmessung von vornherein zu begrenzen.,sodaß Techniken,wie stetige,direkte Analog-Digital-Wandlung o.ä. nicht zum Ziel führen.
Im folgendem wird anhand der beigefügten Zeichnungen ein Ausführungsbeispiel für die regelungstechnische Einrichtung für elektrooptische Entfernungsmesser mit Lichtpulslaufzeit-Meßverfahren nach der Erfindung näher beschrieben.

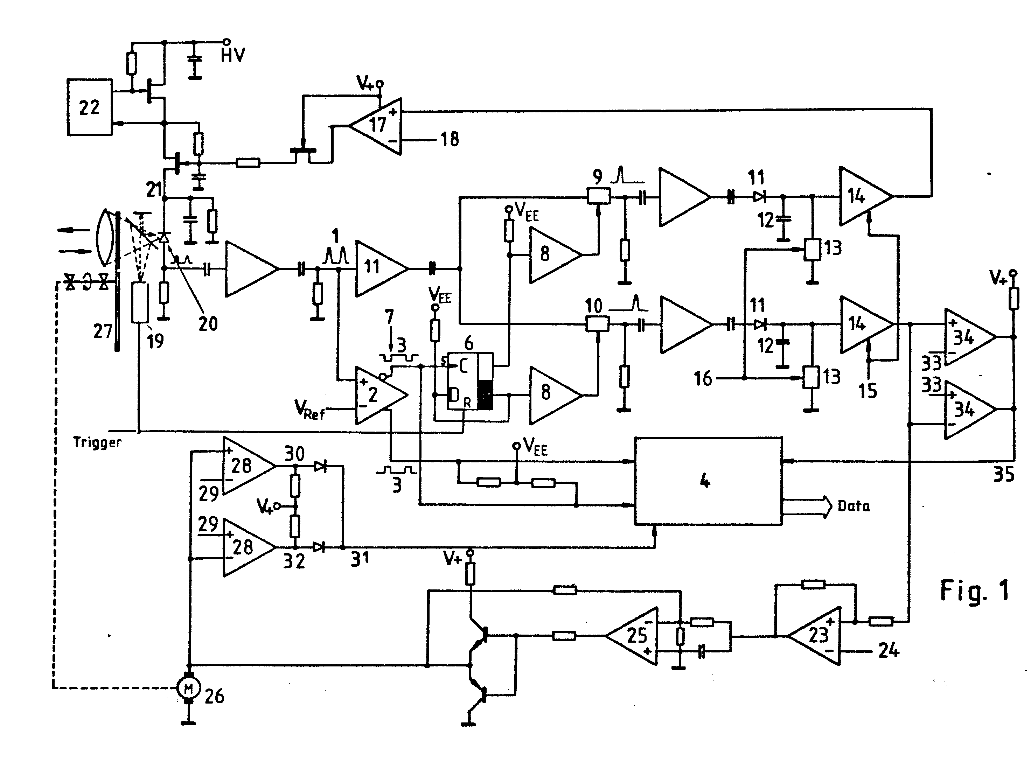

Figur 1 zeigt in schematischer Darstellung eine Ausführungsform einer regelungstechnischen Einrichtung für elektrooptische Entfernungsmesser.
Das analoge Ausgangssignal1des Verstärkers wird über einen Komparator 2 geführt und in logische Pulse3geformt,die einerseits in die eigentliche Entfernungsmeßschaltung 4 geführt werden,in der,nach erfolgter Regelung von Startpuls und Stoppuls,die Auswertung zur Entfernungsmessung erfolgt (hier aber nicht weiter beschrieben),und andererseits auf den Clockeingang 5 eines Flipflops 6.Dabei wird das Ausgangssignal des Komparators 2,der aufgrund der kurzen Pulse eine ECL-kompatible Ausgangsstufe haben muß,so gewählt,daß mit Ende des ersten Pulses,also mit der Rückflanke des Startpulses 7,das zuvor rückgesetzte Flipflop 6 gesetzt wird.Die
Ausgangssignale des Flipflops 6 werden in einer Verstärkerstufe 8 derartig auf Pegel zur Ansteuerung von schnellen
Analogschaltern 9,10 angepaßt,daß synchron einer öffnet,
wenn der andere schließt.Zu diesen beiden Analogschaltern
werden die Analogsignale,die,nachdem sie den Verstärker
verlassen,über einen Trennverstärker 11 geführt.Da
einer der Analogschalter leitend geschaltet ist und der andere
sperrt,durchläuft der Startpuls den leitenden Analogschalter
9,der unmittelbar danach gesperrt wird und synchron dazu
der Stoppuls den anderen Analogschalter 10,der leitend geschaltet wird,passiert.Danach sind die Pulse getrennt und
werden in zwei identischen,getrennten Kreisen weiter verarbeitet.Dabei erfolgt zuerst eine weitere Verstärkung,dann
eine Gleichrichtung über eine Diode 11 in Durchlaßrichtung,
über die ein kleiner Kondensator 12 aufgeladen wird,der zuvor über einen weiteren Analogschalter 13 entladen wurde.
Die nach Gleichrichtung des Pulses an diesem Kondensator 12
anstehende Spannung ist ein Maß für die Amplitude des Pulses.
Diese Spannung wird in einem Abtast-Halte-Glied 14 fixiert
und steht dort als ein,die Amplitude des jeweiligen Pulses
repräsentierendes,sich im Takt der ausgesendeten Meßpulse
änderndes Treppenspannungssignal an.Nach Aussendung des
Startpulses muß nach einer bestimmten Zeit,die der maximalen
Reichweite entspricht,der Stoppuls eingetroffen sein.Andernfalls kann die jeweilige Einzelmessung nicht gewertet werden
(sofern der eigentliche Meßvorgang bereits gestartet wurde).
Die für diese Überwachung zuständigen Signale können zum
Ansteuern des Abtast-Halte-Gliedes 15 und anschließendem
Löschen 16 des Kondensators 12 über die Analogschalter 13 genutzt werden,sodaß nach jeder Einzelmessung die Amplitudenmeßschaltung zur nächsten Messung freigemacht wird und der
gemessene Amplitudenwert,bis zum Eintreffen der nächsten
Pulse,ansteht.
Damit ist erreicht,daß sowohl für den Startpuls als auch für den Stoppuls bis zum Eintreffen der nächsten Pulse der
nächsten Einzelmessung     Amplituden der Einzelpulse repräsentierende Treppenspannungssignale anstehen,die nun zum
Regeln verwendet werden können.
Wichtig dabei ist,daß jeder Puls direkt vermessen wird.
Das Startpulstreppenspannungssignal wird auf einen Operationsverstärker 17 gegeben und mit einem Sollwert verglichen 18.
Es wird mit dem Ausgangssignal des Komparators oder
Operationsverstärkers die thermisch stabilisierte 22
Vorspannung der Photodiode,wenn z.B. eine Avalanche Photodiode (APD) 20 benutzt wird,verändert,bis Sollwert und
vermessener Istwert übereinstimmen.Damit werden Temperaturschwankungen,die entweder durch die Umgebungstemperatur oder
durch die Verlustleistung im Laser 19 auftreten und Änderungen,
die sich durch Alterung von Laser oder Empfänger ergeben,
ausgeglichen.Für den Fall,in dem eine APD verwendet wird,
wird zuvor die Vorspannung 21 der APD thermisch in einer
an sich bekannten Weise derartig stabilisiert,daß der interne
Verstärkungsfaktor der Diode über die Temperatur konstant
gehalten wird 22.Mit der Startpulsregelung kann also nur
die Empfindlichkeit von der zuvor eingestellten,maximal
zulässigen Empfindlichkeit(durch die Temperaturstabilisierung
der APD)auf geringere Werte geregelt werden.Da bei zunehmender
Temperatur die Ausgangsleistung des Lasers sinkt,kann bei
konstanter Sollwertvorgabe durch eine entsprechende Vergrößerung des Anteils vom ausgesendeten Lichtpuls,der als Startpuls auf die Photodiode geleitet wird,von vornherein eine
Regelung auf einen unterhalb der maximalen Empfindlichkeit
liegenden Wert erzwungen werden,sodaß sichergestellt werden
kann,daß ein für alle Fälle ausreichender Regelbereich vorhanden ist.Diese Einstellung des Anteils kann einmalig bei der
Herstellung des Entfernungsmessers vorgenommen werden.
Das Stoppulstreppenspannungssignal wird für drei Regelungstechnische Zwecke verwendet.Erstens dient es dazu,das Stopsignal
auf einen vorgegebenen Sollwert zu regeln.Zweitens wird bei
jeder Einzelmessung entschieden,ob der Unterschied zwischen Sollwert und Istwert eine bestimmte Größe nicht überschreitet und drittens wird,wenn Sollwert und Mittelwert des Istwertes für eine bestimmte Zeit gleich sind,der eigentliche Meßvorgang begonnen.Der Variationsbereich der Stoppulsamplitude unterscheidet sich wesentlich von dem der Startpulsamplitude durch die oben erwähnten,verschiedenen Reflexiongrade der Ziele und Entfernungen . Darüberhinaus unterliegt der Stoppuls den Einflüssen der Atmosphäre,die durch Dichteschwankungen und Strahlauslenkungen Amplitudenschwankungen über einige Zehnerpotenzen verursachen kann. Aus diesem Grunde wird zuerst einmal das Stoppulstreppenspannungssignal mittels eines Operationsverstärkers 23 mit einem Sollwert 24 verglichen und die Differenz verstärkt und gemittelt 25,zur Ansteuerung eines Motors benutzt,der Abschwächungsfilter oder Abschattungsblenden in den Strahlengangfür den Stoppuls ein-oder ausfährt,um den Stoppuls auf den Sollwert zu regeln.Da es sich bei der atmosphärischen Beeinflussung um einen statistischen Vorgang handelt,kann auf diese Weise nur der Mittelwert entsprechend geregelt werden,denn Untersuchungen über den Einfluß der Atmosphäre zeigen,daß Amplitudenschwankungen so hohe Frequenzanteile haben,daß diese nicht von einem Motor ausgeregelt werden können.Das gemittelte Stoppulstreppenspannungssignal liefert durch Vergleich über zwei Komparatoren 28 mit fest eingestellten Referenzspannungen 29 ebenfalls die Aussagen: Amplitude zu groß,Amplitude zu klein,Amplitude richtig,30,32, 31.Diese werden dem Benutzer geeignet angezeigt,sodaß er damit gleichzeitig eine Hilfe hat,den Entfernungsmesser zum Ziel auszurichten.Ist das Signal -Amplitude richtigfür eine gewisse Zeit vorhanden (größer als die Zeitkonstante der Motorregelung),so wird der eigentliche Meßvorgang automatisch gestartet,31.

In einer weiteren Schaltung wird mittels eines Fensterkomparators 34 überprüft,ob das Stoppulstreppenspannungssignal sich in einem,für die Entfernungsmessung geeigneten,durch die Referenzspannungen 33 vorgegebenen Bereich befindet.

Dieses Bewertungssignal 35 wird dazu benutzt,einzelne Messungen,die mit nicht ausreichend genau eingestellten Amplitudenwerten vorgenommen wurden,in der Meßschaltung 4 zu löschen.Auf diese Weise können beliebige Störungen wie Passanten,fahrende Autos,Blätter oder starke atmosphärische Störungen o.ä, die die direkte Sichtverbindung zum reflektierenden Gegenstand verhindern,in ihrer Auswirkung auf die Meßgenauigkeit einfach ausgeschieden werden,indem die Meßzeit um die Zeit der Unterbrechung verlängert wird.

Verschiedene vorteilhafte Ausführungsformen der erfindungsgemäßen regelungselektronischen Einrichtung sind möglich und Gegenstand der Unteransprüche.

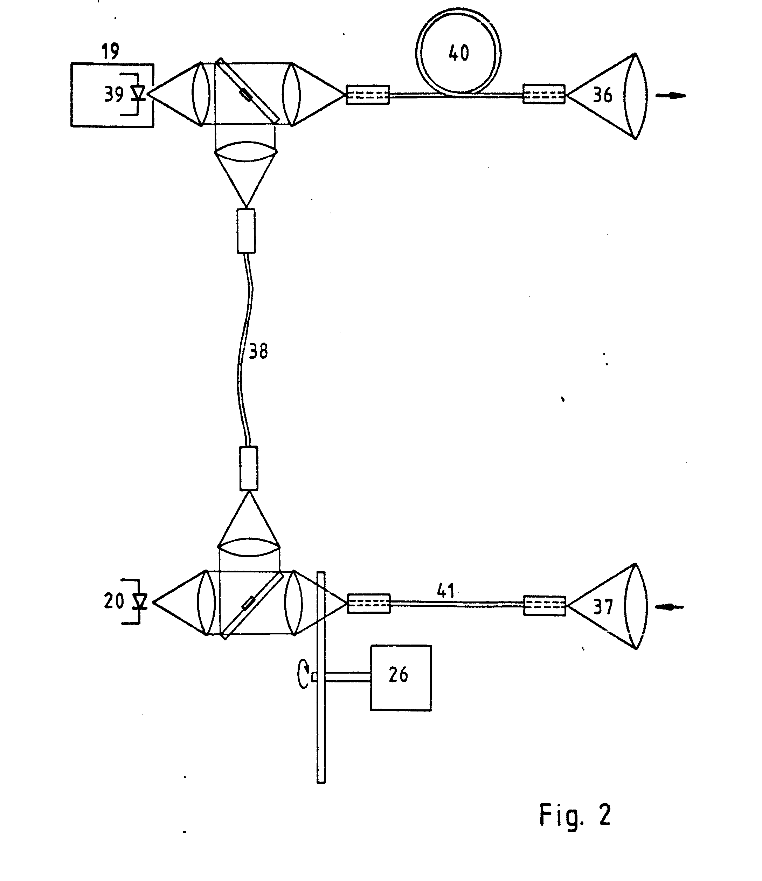

So zeigt Figur 2 die schematische Darstellung eines optischen Systems zur Regelungstechnischen Einrichtung, das insbesondere zur Messung sehr kurzer Entfernungen geeignet ist.

Für Entfernungen im nahen Bereich von einigen cm bis einigen Metern ist die zur Verfügung stehende Zeit zum Rangieren von Startpuls und Stoppuls auf getrennte Leitungen und anschließender Amplitudenmessung zu kurz (insbesondere dann, wenn die Pulsbreite des Lichtpulses die Lichtlaufzeit überschreitet),sodaß,vorzugsweise bei getrenntem Strahlengang für Sendeoptik 36 und Empfangsoptik 37,der Startpuls 38 durch Auskoppeln direkt an der Quelle 39 und zusätzlichem Verzögern des gesendeten Lichtpulses durch ein hinter der Auskopplung liegendes Stück Glasfaser 40,das als Rolle ausgebildet sein kann,eine über die reine Lichtlaufzeit zum Ziel hin und zurück hinausgehende Zeitdifferenz erzeugt wird, die die Anwendung der erfindungsgemäßen regelungstechnischen Einrichtung gestattet.

Zusammengefaßt ergeben sich folgende Vorteile:

Getrennte Messung der Pulsamplituden von Startpuls und Stoppuls ermöglicht die Herbeiführung immer gleicher Meßvoraussetzung für jede Entfernungsmessung durch einfache regelungstechnische Mittel.

Keine unterschiedliche Behandlung von Startpuls und Stoppuls ,sodaß die Durchlaufverzögerungszeiten von beiden
Pulsen durch den Empfänger identisch ist.

Sofortige Prüfung,ob Einzelmessung Bedingungen für Amplitudenmessung erfüllt,sodaß auch bei statistischen Amplitudenschwankungen und Störungen der direkten Sichtverbindung
zum reflektierenden Gegenstand die Meßgenauigkeit nicht
verschlechtert wird.

0093437

Patentansprüche

1. Regelungselektronische Einrichtung für elektrooptische
Entfernungsmesser mit Lichtpulslaufzeit-Meßverfahren
gekennzeichnet dadurch,daß jeweils die Amplitude von
Startpuls und Stoppuls,die dadurch erzeugt werden,daß
von in bestimmten Zeitabständen periodisch ausgesendeten,
kurzen Lichtpulsen ein kleiner Anteil direkt auf einen
Optischen Empfänger gelenkt wird (Startpuls) und der,
von einem Gegenstand,dessen Entfernung vermessen werden
soll,reflektierte Lichtpuls(Stoppuls),verzögert um die
Laufzeit hin und zurück,ebenfalls auf diesen Empfänger,
steuerbar abgeschwächt,gelenkt wird und beide Lichtpulse von
diesem Empfänger in zwei,in ihrem zeitlichen Abstand
von der Entfernung abhängige,dicht aufeinanderfolgende analoge
elektrische Pulse,nämlich    Startpuls und Stoppuls,
gewandelt werden - vor und während des eigentlichen Meßvorganges, zur Schaffung der dazu nötigen Voraussetzungen,
mit jeder Pulsaussendung dadurch direkt gemessen wird,daß
beide Pulse,die auf einer elektrischen Ausgangsleitung
aus dem optischen Empfänger kommend   ,mittels eines
Komparators 2 in logische Signale umgesetzt werden,
einer Zeitmeßeinrichtung 4 zugeführt werden und andererseits dazu benutzt werden,weitere logische Signale zu erzeugen,die sofort nach Durchlaufen des Startpulses durch
den Komparator  zwei Analogschalter 9,10,von denen zuvor
einer leitend und einer sperrend geschaltet war,umzusteuern,
sodaß die analogen elektrischen Pulse,die parallel zum
Komparatorzweig direkt oder über einen Trennverstärker  11
auf diese beiden Analogschalter 9,10 geführt werden und
durch den Umschaltvorgang auf zwei separate Leitungen
getrennt werden,jeweils über eine Diode 11  in je einem
Kondensator 12 integriert   werden,die zuvor über weitere
Analogschalter 13 jeweils vor Einlaufen der Pulse entladen wurden und damit die an den Kondensatoren anstehenden
Spannungen die Amplituden von Startpuls und Stoppuls
repräsentieren,die mittels zweier Abtast-Halte-Glieder 14
bis zur nächsten Pulsaussendung fixiert werden und
dadurch,daß ständig neue Pulse ausgesendet werden am
Ausgang der Abtast-Halte-Glieder Treppenspannungssignale entstehen,wovon diejenige des Stoppulses dafür
benutzt wird,die mittlere Stoppulssignalamplitude auf
einen für die genaue Entfernungsmessung immer konstanten Mittelwert zu regeln,indem das entsprechende Teppenspannungssignal zum Antrieb eines Motors aufbereitet
wird,der auf eine Einrichtung zum Schwenken oder Drehen
von Abschwächungsfiltern oder Blenden einwirkt,die im
Strahlengang des optischen Stoppulses vorhanden sind und
diesen dadurch in seiner Amplitude verändern und oder
mittels Komparatoren durch Vergleich des Treppenspannungssignals mit einem Sollwertebereich für jede einzelne
Pulsaussendung zu ermitteln,ob die Stoppulsamplitude
innerhalb einer für die Entfernungsmessung vorgegebenen
Amplitudenzone liegt und oder mittels Komparatoren durch
Vergleich des gemittelten Treppenspannungssignals mit
einem Sollwertebereich oder einem Sollwert zu ermitteln,
ob der Mittelwert der Stoppulsamplituden innerhalb
für die Entfernungsmessung erforderlicher Grenzen liegt
und daraus das Startsignal für den eigentlichen Entfernungsmeßvorgang zu liefern und diejenige des Startpulses
dafür benutzt wird,mittels Operationsverstärker oder
Komparator durch Vergleich des Treppenspannungssignals
mit einem für den Startpuls vorgegebenen Referenzwert
ein Steuersignal für die Empfindlichkeitsregelung des
optischen Empfängers zu erhalten und damit die Empfindlickeit des Empfängers so zu regeln,daß Sollwert und
Istwert in engen Grenzen übereinstimmen.

2. Regelungselektronische Einrichtung nach Anspruch 1
   dadurch gekennzeichnt,daß als Komparator 2 ein schneller
   im Ausgang ECL-kompatibler Komparator verwendet wird,
   dessen invertierender Ausgang auf ein ECL-kompatibles
   Flipflop 6 geführt wird,das mit der Rückflanke des
   in ein logisches Signal umgeformten Startpulses 7 gesetzt
   wird und mit den über Pegelanpassungsglieder 8 geeignet
   angepaßten beiden komplementären Ausgangssignalen dieses
   Flipflops die Analogschalter 9,10 genau zu dem Zeitpunkt
   angesteuert werden zu dem die Rückflanke des Startpulses
   den Analogschalter 9 gerade passiert hat.

3. Regelungselektronische Einrichtung nach Anspruch 1
   dadurch gekennzeichnet,daß mittels einer Clock periodisch
   ein logisches Signal erzeugt wird,daß die Aussendung
   eines Lichtpulses initiiert und daraus abgeleitet ein
   Signal gebildet wird mit dem überwacht wird,ob innerhalb
   einer festgesetzten Zeit,die kleiner ist als die Zeit bis
   zur Aussendung des nächsten Lichtpulses,ein Stopsignal
   eingetroffen ist und dieses Signal dazu benutzt wird,
   nach Ablauf dieser festgesetzten Zeit,die der maximalen
   Meßentfernung entspricht,die Abtast-Halte-Glieder 14 zur
   Übernahme der gerade anstehenden Spannungswerte an den
   Integrationskondensatoren 12 anzusteuern,sodaß lückenlose
   Treppenspannungssignale sowohl für den Startpuls als auch
   für den Stoppuls an den Ausgängen der Abtast-Halte-Glieder
   anstehen.

4. Regelungselektronische Einrichtung nach Anspruch 1
   dadurch gekennzeichnet,daß das Treppenspannungssignal
   des Startpulses mittels eines Komparators oder eines
   Operationsverstärkers 17 mit einem Sollwert 18 verglichen
   wird und mit dessen Ausgangsspannung über einen Tiefpaß gemittelt die Vorspannung für die Avalanche-Photodiode
   20 des optischen Empfängers solange geregelt wird

bis Sollwert und Istwert der Startpulsamplitude in engen Grenzen übereinstimmen.

5. Regelungselektronische Einrichtung nach Anspruch 1 dadurch gekennzeichnet,daß das Treppenspannungssignal des Stoppulses mittels eines Fensterkomparators 34 mit einem Sollwertebereich verglichen wird und das Signal 35 -Amplitude zu groß-,-Amplitude zu klein- in der Entfernungsmeßschaltung 4 die zugehörige Einzelmessung unterdrückt.

6. Regelungselektronische Einrichtung nach Anspruch 1 dadurch gekennzeichnet,daß das über einen Tiefpaß gemittelte Ausgangssignal des Operationsverstärkers 23 mittels zweier Komparatoren 28 mit dem Sollwertbereich des Stoppulses 29 verglichen wird und die Signale -Amplitude zu groß-,-Amplitude zu klein-,-Amplitude richtig-,30,31,32 am Entfernungsmeßgerät geeignet zur Anzeige gebracht werden,um dem Bediener zu ermöglichen,das Gerät auf das Ziel auszurichten.

7. Regelungselektronische Einrichtung nach Anspruch 1 dadurch gekennzeichnet,daß das Signal -gemittelte Amplitude des Stoppulses im Sollwertebereich- 31,integriert wird und mittels eines Komparators oder Operationsverstärkers die integrierte Spannung dann in ein logisches Signal umgesetzt wird,wenn diese einen bestimmten Wert überschritten hat und das daraus gebildete logische Signal zum Start des Entfernungsmeßvorganges in der Meßschaltung 4 genutzt wird.

8. Regelungselektronische Einrichtung nach Anspruch 1 dadurch gekennzeichnet,daß als Lichtsender eine glasfasergekoppelte,gepulst betriebene Lichtquelle,vorzugsweise eine glasfasergekoppelte Halbleiterlaserdiode verwendet wird,wobei das optische Startsignal 30 direkt an der Koppelstelle abgeteilt und auf den optischen Empfänger geführt wird,während der gesendete Lichtpuls noch ein Glasfaserstück 40 durchlaufen muß,sodaß der
Stoppuls über die Lichtlaufzeit zum Ziel hin und
zurück hinaus gegenüber dem Startpuls verzögert wird.

9.Regelungselektronische Einrichtung nach Anspruch 1
gekennzeichnet dadurch,daß der optische Geräteteil
vom elektronischen Geräteteil dadurch getrennt werden
kann,daß sowohl.die Lichtquelle als auch die Photodiode glasfasergekoppelt ausgeführt sind und die
Glasfasern 40,41 als Lichtleitkabel ausgebildet sind
die die Verbindung zwischen beiden Geräteteilen darstellen.

0093437

Fig. 1

Fig. 2